# EUROPÄISCHE PATENTSCHRIFT

(11) **EP 1 078 967 B1**
(45) Veröffentlichungstag und Bekanntmachung des Hinweises auf die Patenterteilung: **14.06.2006**
(21) Anmeldenummer: 00117047.1
(22) Anmeldetag: 09.08.2000
(51) Int. Cl.: C09J 7/02

(54) **Verpackungsklebebänder**
Packaging adhesive tapes
Rubans adhésifs pour emballage

(30) Priorität: 25.08.1999 DE 19940215
(43) Veröffentlichungstag der Anmeldung: 28.02.2001
(73) Patentinhaber: tesa AG, 20253 Hamburg (DE)
(72) Erfinder: Spies, Manfred, Dr., 23576 Bad Bramstedt (DE); Kozaczka, Zygmut, 22299 Hamburg (DE)

(56) Entgegenhaltungen:
- EP-A- 0 476 168
- EP-A- 0 688 843
- DE-A- 2 358 467
- US-A- 4 189 419
- US-A- 4 438 232
- DATABASE WPI Section Ch, Week 199115 Derwent Publications Ltd., London, GB; Class A18, AN 1991-104953 XP002161591 & JP 03 045676 A (MITSUI TOATSU CHEM INC), 27. Februar 1991 (1991-02-27)

## Beschreibung

Die Erfindung betrifft die Entwicklung von Haftklebebändern auf Basis von Styrol/Butadien Latices mit einem hohen Butadiengehalt und Harzdispersionen.

In der Patentliteratur existiert eine Vielzahl von Anmeldungen zur Herstellung von Verpackungsklebebändern.

Die seit langem bekannten klassischen Klebemassesyteme für Verpackungsklebebänder basieren im wesentlichen auf Naturkautschuk, Styrol-Blockcopolymeren und Polyacrylaten.

Die Naturkautschuksysteme werden üblicherweise als Lösung in einem aliphatischen Lösungsmittelgemisch eingesetzt. Wasserbasierte Naturkautschukmassen auf Basis Zentrifugenlatex sind ebenfalls bekannt. Für die Einstellung der geforderten klebtechnischen Eigenschaften ist der Zusatz von Harzen, Füllstoffen, Alterungsschutzmitteln unumgänglich. Eine Vernetzung erfolgt entweder chemisch über zugesetzte Vernetzungsagenzien, oder physikalisch über z.B. Elektronenstrahlhärtung.

Synthetische Kautschuke auf Basis von Styrol-Blockcopolymeren wurden in der Vergangenheit ebenfalls als Klebemassen für Verpackungsklebebänder beschrieben. Hierbei handelt es sich um 100% Systeme, die nach Abmischung mit Harzen und weiteren Coagenzien im geschmolzenen Zustand ohne Anwesenheit von Lösungsmitteln oder Wasser aufgetragen werden können.

Die Verwendung von Polyacrylaten als Klebemassen für Verpackungsklebebänder ist ebenfalls bekannt. Neben Lösungen aus Polyacrylaten sind in der Vergangenheit auch Polyacrylatdispersionen beschrieben worden, die nach Compoundierung mit Harzdispersionen und weiteren Coagenzien die Anforderungen einer Verpackungsklebebandmasse erfüllen. Acrylatdispersionen zeigen ein relativ schlechtes Anfaßverhalten auf Kartons, insbesondere dann, wenn das Substrat aus mehrfach recyclierten Papieren stammt, was bei Verpackungskartons zunehmend der Fall ist. Durch Zusatz von Harzdispersionen kann dieser Mangel beseitigt werden. Da Naturharzdispersionen auf Basis von Kolophoniumderivaten die Kohäsion von Acrylatmassen häufig in unerwünschter Weise beeinflussen, bedient man sich eher der kohäsiveren Kohlenwasserstoffharzdispersionen, die von verschiedenen Harzherstellern angeboten werden.

Als Trägermaterialien für Verpackungsklebebänder werden üblicherweise mono- oder biaxial gereckte Polyolefine, PVC-Typen oder Papiere eingesetzt.

Styrol/Butadien Latices werden im Bereich der "Pressure Sensitive Adhesives" seit vielen Jahren zur Imprägnierung und Stabilisierung von Trägermaterialien eingesetzt. Hierbei stehen Papiere Gewebe und Vliese im Vordergrund. Die Imprägnierung oder Beschichtung darf aufgrund der Anwendung keinesfalls klebrig sein. Die für diese Anwendung eingesetzten Styrol/Butadien Copolymere müssen daher einen relativ hohen Anteil an hartmachenden Monomeren enthalten, aber andererseits genügend weichmachendes Monomer, so daß das Copolymer insgesamt noch elastisch ist. Styrol/Butadien Latices mit einem Butadiengehalt von etwa 25-50% erfüllen diese Anforderung sehr gut. Filme dieser Copolymeren sind in Abhängigkeit des Butadiengehaltes mäßig elastisch bis elastisch, und nicht klebend. Derartige Copolymere sind schon seit vielen Jahren auf dem Rohstoffmarkt verfügbar (Butofan® -Typen der BASF, diverse Typen von Dow und Synthomer). Bedingt durch ihre Herstellung enthalten derartige Latices bzw. Dispersionen Emulgator-Systeme, um eine Kompatibilität zwischen der organischen und der wässrigen Phase herzustellen.

Styrol/Butadien Copolymere wurden in der Vergangenheit auch als Basispolymere für Etikettenmassen eingesetzt. Im Bereich der Etiketten kommt der Kohäsion häufig sekundäre Bedeutung zu, so daß schwach klebende Systeme nach Compoundierung mit üblichen Tackyfiem in vielen Fällen ausreichende Eigenschaften zeigen.

Als Gerüstpolymer für Verpackungsklebebandmassen sind nicht oder schwach klebende Copolymere auf Basis von Styrol/Butadien Copolymeren nur mangelhaft geeignet, da sie nur mit erheblichen Mengen an Tackyfierharzen klebrig gemacht werden können, was wiederum mit einem weitreichenden Kohäsionsverlust verbunden ist. Dieses schließt eine Anwendung als Klebemasse für Verpackungsklebebänder aus.

Styrol/Butadien Copolymere sind aber aufgrund der Polymerstruktur und des Preisniveaus als Gerüstpolymere für anspruchsvolle Haftklebemassen grundsätzlich von Interesse.

In der US 4,438,232 A ist eine Klebemasse beschrieben, die zwingend 5 bis 30 % C₁₋₈-Alkylester enthält. Die Klebemasse entspricht einer üblichen druckempfindlichen Klebemasse, die sich durch eine vergleichsweise geringe Kohäsion auszeichnet. Eine derartige Klebemasse ist für Verpackungsklebebänder nicht geeignet.

Auch die US 4,189,419 A beschreibt keine Verpackungsklebebänder. Ebenso ist die hier beschriebene Klebemasse nicht geeignet, in einem Verpackungsklebeband eingesetzt zu werden.

In dem Derwent-Abstract der JP 03 045 676 A ist eine Klebemasse gezeigt, die über einer Styrol/Butadien-Dispersion hinaus einen bedeutenden Anteil an Acrylaten aufweist.

Aufgabe der Erfindung war es hier Abhilfe zu schaffen, und eine Styrol/Butadien basierende Klebemasse bereit zu stellen, die die genannten Mängel nicht aufweist, und mit der ein Haftklebeband gemacht werden kann, das den Anforderungen einer Verpackungsklebebandes gerecht wird.

Gelöst wurde die Aufgabe durch Verwendung einer Klebemasse, die aus einer Abmischung aus einer Styrol/Butadien-Dispersion mit einem Butadiengehalt größer 55 % und aus einer Harzdispersion besteht, wobei der Harzanteil im Bereich 5 bis 50 % bezogen auf den Gesamtfeststoffgehalt liegt und die durch zugesetzte Vernetzer chemisch oder physikalisch vernetzt ist. Zu dem so erhaltenen Compound können ggf. weitere Coagenzien wie z. B. Alterungsschutzmittel oder weitere Emulgatoren zugemischt werden, um den

Alterungsschutz zu verbessern oder die Abrolleigenschaften weiter an die Anwendung anzupassen. Nach Beschichtung der Klebemasse auf einem Polymer- oder Papierträger und anschließender Trocknung ist ein Haftklebeband erhältlich, das die Anforderungen eines Verpackungsklebebandes im Hinblick auf Tack, Klebkraft und Kohäsion und Abrolleigenschaften voll erfüllt.

### Klebemassen:

Die Homopolymerisation von Styrol in wässrigem Medium liefert Polymere, die aufgrund des hohen Tg auch für Lackanwendungen eine nur sehr eingeschränkte Bedeutung hat. Die Copolymerisation von Styrol mit etwa 35-45 % Butadien in wässrigem Medium liefert Copolymere, die filmbildend sind, und bei denen eine Mindestfilmbildetemperatur von etwa 0°C erreichbar sind, so daß diese Systeme im Bereich der Grundierung, Lackierung, Bindemittel, und der allgemeinen Modifizierung eingesetzt werden können. Styrol/Butadien Dispersionen werden allgemein durch den Einbau geringer Mengen carboxylhaltiger Gruppen stabilisiert, was gleichzeitig die Haftung auf vielen Untergründen verbessert.

Als Klebemassen für die Erfindung können insbesondere carboxylierte Styrol/Butadien-Copolymer-Dispersionen eingesetzt werden mit einem Butadienanteil von 55-95%, vorzugsweise 60-85%, bezogen auf den Gesamtfeststoffanteil an Styrol und Butadien, die im Gemisch mit Harzdispersionen eine hervorragende Eignung als Klebemassen für Verpackungsklebebänder zeigen. Carboxylierte derartige Copolymere enthalten insbesondere unter 10%, bevorzugt unter 5% bezogen auf den Monomergehalt an carboxylhaltigen Comonomer, insbesondere Acrylsäure, im Copolymer.

Erfindungsgemäße Styrol/Butadien-Dispersionstypen mit einen einem Butadiengehalt >60% sind z.B. von Dow erhältlich.

Als Harzkomponente können sowohl Dispersionen synthetischer Harze( z.B. Kohlenwasserstoffharz, Terpenphenolharze etc.), als auch Naturharzdispersionen (z.B. Kolophoniumderivate, Polyterpene etc.) verwendet werden.

Kohlenwasserstoffharzdispersionen sind aufgrund der hohen Kohäsion deutlich zu bevorzugen. Der Schmelzpunkt der Basisharze sollte im Bereich 50-120°C liegen, vorzugsweise 60-100°C. Bezogen auf den Gesamtfeststoffgehalt an Styrol/Butadien Copolymer und Harz liegt der Harzanteil im Bereich 5-50%, vorzugsweise 10-40%. Zur gezielten Einstellung der klebtechnischen Eigenschaften können auch Mischungen aus unterschiedlichen Harzen eingesetzt werden. Zur Verbesserung des Alterungsverhaltens können Dispersionen üblicher Alterungsschutzmittel zugesetzt werden, die aus dem Bereich der Elastomeren hinreichend bekannt sind.

Weiterhin können bei Bedarf weiterer Additive zur Anpassung der Produkteigenschaften zugesetzt werden, wie z.B. Füllstoffe, Weichharze, Öle oder Emulgatoren z.B. vom Typ alkoxylierter Alkylphenole. Mit diesen Additiven gelingt es, die Abrolleigenschaften in gewünschter Weise zu beeinflussen.

Die Einstellung der Adhäsion/Kohäsion Balance kann durch chemische Vernetzung über die vorhandenen Carboxylgruppen durch zugesetzte Vernetzungsagenzien wie z.B. Aluminium- oder Titanchelat erfolgen. Eine strahlenchemische Vernetzung ist im Gegensatz zu vielen Styrol-Blockcopolymeren aufgrund des ausreichend hohen Molekulargewichtes ebenfalls möglich.

Eine Übersicht über mögliche Harzdispersionen findet sich in: Donatas Satas, *Handbook of Pressure Sensitive Adhesive Technology*, 2. Edition Resin Dispersion by Anne Z. Casey S. 545-566

Erfindungsgemäße Harzdispersionen sind z.B. über Hercules (NL) erhältlich.

Der Klebemasseauftrag beträgt 10-120g/m², bevorzugt 15-40g/m².

### Trägermaterialien:

Als Trägermaterialien für die Erfindung kommen die für Verpackungsanwendungen üblichen Trägermaterialien in Betracht. Hierbei handelt es sich im wesentlichen um Folien und Papiere, die aufgrund ihrer Eigenschaften und des Herstellungs- bzw. Nachbehandlungsprozeßes die geforderten mechanischen Eigenschaften aufweisen.

Im Falle der Folien handelt es sich im wesentlichen um Polyethylen, Polypropylen, Polyvinylchlorid und andere für die Anwendung üblichen Polymere und Copolymere, die sowohl einschichtig als auch mehrschichtig eingesetzt werden können. Bei mehrschichtigen Systemen kann auch die Zusammensetzung und die Dicke der einzelnen Schichten variieren.

Monoaxial und biaxial gereckte Polypropylene werden häufig für Verpackungsklebebänder, Strapping Tapes und andere Klebebänder eingesetzt, bei denen eine definierte Reißfestigkeit von nicht unerheblicher Bedeutung ist.

Monoaxial gereckte Polypropylene zeigen eine besonders gute Reißfestigkeit und geringe Dehnung in Längsrichtung. Derartige Trägermaterialien werden häufig für Strapping Anwendungen eingesetzt.

Zur Erzielung gleichmäßiger Festigkeitswerte in Längs- und Querrichtung müssen Folien biaxial gereckt werden.

Sowohl mono- als auch biaxial gereckte Polypropylene und Polyethylene sind als Trägermaterial für die Erfindung besonders geeignet. Die Reckverhältnisse orientieren sich dabei an den entsprechenden Anforderungen.

Es können sowohl Blas-, als auch Flachfolie eingesetzt werden.

Die Dicken der Folien liegen zwischen 10 und 250 µm, bevorzugt zwischen 20 und 120 µm.

Um eine ausreichende Haftung der Klebemasse auf dem Trägermaterial sicherzustellen muß die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien sollten in einem Bereich von 25-50mN/m, bevorzugt 30-45 mN/m liegen.

Als Trägermaterialien kommen desweiteren imprägnierte und hochgeleimte definiert gekreppte Papiere mit Reißfestigkeiten in Betracht, die den gewünschten Anforderungen genügen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter, als auch in der umweltfreundlichen ungebleichten Version.

Alle Prozentangaben beziehen sich auf Gewichts-%.

### Beispiele:

### Beispiel 1:

Eine Dispersionsklebemasse bestehend aus 70% einer carboxylierten Styrol/Butadien Dispersion mit einem Butadiengehalt von 64% (XZ 91976.00, Styrol/Butadien Dispersion der Firma Dow) und 30% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoff-Gehalt bezogen.

### Technische Bedingungen:

| | |
|---|---|
| Maschine: | Technikumsbeschichtungsanlage |
| Auftragswerk: | Drahtrakel |
| Trägerbahngeschwindigkeit: | 3,5 m/min |

### Das beschichtete Material wird anschließend thermisch getrocknet:

| | |
|---|---|
| Trocknung (Schwebedüsentrockner): | Zone 1: 80 °C |
| | Zone 2: 85 °C |

Das Ballenmaterial wird anschließend zu Rollen geschnitten.

### Klebtechnische Daten (Frischzustand):

*Klebkraft*/*Stahl: 3,9N*/*cm*
*Klebkraft*/*Rückseite:3, 1N*/*cm*
*Abrollkraft (300mm*/*min):3,9N*/*cm*
*Scherstandzeit*/*Stahl(13x20mm,1kp): 475 min:*
*Microscherweg (40°C, 1N, {ε*_{*2*}/*ε*_{*1*}*}):0,53*
*Thermoscherweg (5°C*/*min, 3N, in °C): 105*

### Beispiel 2:

Eine Dispersionsklebemasse bestehend aus 65% einer carboxylierten Styrol/Butadien Dispersion mit einem Butadiengehalt von 64% (XZ 91976.00, Styrol/Butadien Dispersion der Firma Dow) und 35% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoffgehalt bezogen.

### Technische Bedingungen:

| | |
|---|---|
| Maschine: | Technikumsbeschichtungsanlage |
| Auftragswerk: | Drahtrakel |
| Trägerbahngeschwindigkeit: | 3,5 m/min |

Das beschichtete Material wird anschließend thermisch getrocknet:

| | |
|---|---|
| Trocknung (Schwebedüsentrockner): | Zone 1: 80 °C |
| | Zone 2: 85 °C |

Das Ballenmaterial wird anschließend zu Rollen geschnitten.

### Klebtechnische Daten (Frischzustand):

*Klebkraft*/*Stahl: 3,7N*/*cm*
*Klebkraft*/*Rückseite:2,9N*/*cm*
*Abrollkraft (300mm*/*min):3,4N*/*cm*
*Scherstandzeit*/*Stahl(13x20mm, 1kp): 745 min:*
*Microscherweg (40°C,1N, {ε*_{*2*}/*ε*_{*1*}*}): 0,43*
*Thermoscherweg (5°C*/*min, 3N, in °C): 107*

## Patentansprüche

1. Verpackungsklebeband mit einem Träger und einer Klebemasse, **dadurch gekennzeichnet, dass** die Klebemasse aus einer Abmischung aus einer Styrol/Butadien-Dispersion mit einem Butadiengehalt größer 55 % und aus einer Harzdispersion besteht, wobei der Harzanteil im Bereich 5 bis 50% bezogen auf den Gesamtfeststoffgehalt liegt, die Klebemasse durch zugesetzte Vernetzer chemisch oder physikalisch vernetzt ist, der Mischung gegebenenfalls Alterungsschutzmittel, Füllstoffe, Weichharze, zöge oder Emulgatoren zugesetzt sind und wobei die Mischung auf dem Träger beschichtet und anschließend getrocknet wird.

2. Verpackungsklebeband nach Anspruch 1 **dadurch gekennzeichnet, dass** die Harzdispersion vom Typ einer Kohlenwasserstoffharzdispersion ist mit einem Erweichungspunkt des Basisharzes zwischen 50 und 120°C.

3. Verpackungsklebeband nach Anspruch 1 **dadurch gekennzeichnet, dass** die Harzdispersion ein Gemisch aus mehreren Kohlenwasserstoffharzdispersionen oder ein Gemisch aus Kohlenwasserstoffharzdispersionen mit Naturharz dispersionen ist.

4. Verpackungsklebeband nach Anspruch 1 **dadurch gekennzeichnet, dass** die Klebemasse durch Elektronenstrahlhärtung physikalisch vernetzt ist.

5. Verpackungsklebeband nach Anspruch 1 **dadurch gekennzeichnet, dass** der Träger ein gerecktes oder ungerecktes Polyolefin mit einer Foliendicke zwischen 20 und 120 µm, ein PVC oder ein Papier ist.

6. Verpackungsklebeband nach Anspruch 1 **dadurch gekennzeichnet, dass** der Masseauftrag der Klebemasse 10-120 g/m² beträgt.

7. Verpackungsklebeband nach Anspruch 1 **dadurch gekennzeichnet, dass** zur Verbesserung der Masseverankerung eine physikalische Oberflächenbehandlung des Trägers erfolgt ist oder der Träger mit einem Primer vorbehandelt ist.

8. Verpackungsklebeband nach Anspruch 1, **dadurch gekennzeichnet, dass** die Styrol/Butadien-Dispersion vom Typ einer carboxylierten Styrol/Butadien-Dispersion ist.

9. Verpackungsklebeband nach Anspruch 1, **dadurch gekennzeichnet, dass** der Harzanteil im Bereich 10 bis 40% bezogen auf den Gesamtfeststoffgehalt liegt.

10. Verwendung eines Verpackungsklebebandes nach einem der Ansprüche 1 - 9 zum Verkleben mit hoher Anfassklebkraft und hohen Kohäsionswerten insbesondere auf recyclierten Papieren oder Pappen.

## Claims

1. Adhesive packaging tape comprising a backing and an adhesive composition, **characterized in that** the adhesive composition is composed of a blend of a styrene/butadiene dispersion having a butadiene content of more than 55% and of a resin dispersion, the resin fraction being in the range 5 to 50%, based on the total solids content, the adhesive composition being chemically or physically crosslinked by means of added crosslinkers, ageing inhibitors, fillers, plasticizer resins, oils or emulsifiers being added if desired to the mixture, and the mixture being coated on the backing and then dried.

2. Adhesive packaging tape according to Claim 1, **characterized in that** the resin dispersion is of the hydrocarbon resin dispersion type with a softening point of the base resin of between 50 and 120°C.

3. Adhesive packaging tape according to Claim 1, **characterized in that** the resin dispersion is a mixture of two or more hydrocarbon resin dispersions or a mixture of hydrocarbon resin dispersions with natural resin dispersions.

4. Adhesive packaging tape according to Claim 1, **characterized in that** the adhesive composition is physically crosslinked by means of electron beam curing.

5. Adhesive packaging tape according to Claim 1, **characterized in that** the backing is an oriented or unoriented polyolefin having a film thickness of between 20 and 120 µm, a PVC or a paper.

6. Adhesive packaging tape according to Claim 1, **characterized in that** the application rate of the adhesive composition is 10-120 g/m².

7. Adhesive packaging tape according to Claim 1, **characterized in that**, to improve the anchoring of the composition, the backing has been physically surface treated or pretreated with a primer.

8. Adhesive packaging tape according to Claim 1, **characterized in that** the styrene/butadiene copolymer dispersion is of the carboxylated styrene/butadiene copolymer dispersion type.

9. Adhesive packaging tape according to Claim 1, **characterized in that** the resin fraction is situated in the range 10-40%, based on the overall solids content.

10. Use of an adhesive packaging tape according to any of Claims 1-9 for bonding with high initial bond strength and high cohesion values in particular on recycled papers or cardboards.

## Revendications

1. Ruban adhésif pour emballage, comportant un support et une masse adhésive, **caractérisé en ce que** la masse adhésive est composée d'un mélange d'une dispersion de styrène/butadiène d'une teneur en butadiène de plus de 55% et d'une dispersion de résine, la fraction de résine étant de l'ordre de 5 à 50%, par rapport à la teneur totale en solide, la masse adhésive étant réticulée par voie physique ou chimique avec addition de réticulants, des agents de protection contre le vieillissement, des charges, des résines plastifiantes, des huiles ou des émulsifiants étant, le cas échéant, ajoutés au mélange, et le mélange étant appliqué sur le support et séché ensuite.

2. Ruban adhésif pour emballage selon la revendication 1, **caractérisé en ce que** la dispersion de résine est du type d'une dispersion de résine hydrocarbonée présentant un point de ramollissement de la résine de base de 50 à 120°C.

3. Ruban adhésif pour emballage selon la revendication 1, **caractérisé en ce que** la dispersion de résine est un mélange de plusieurs dispersions de résines hydrocarbonées ou un mélange de dispersions de résines hydrocarbonées et de résine naturelle.

4. Ruban adhésif pour emballage selon la revendication 1, **caractérisé en ce que** la masse adhésive est réticulée par voie physique par irradiation par faisceau électronique.

5. Ruban adhésif pour emballage selon la revendication 1, **caractérisé en ce que** le support est une polyoléfine étirée ou non étirée d'une épaisseur de feuille de 20 à 120 µm, un PVC ou un papier.

6. Ruban adhésif pour emballage selon la revendication 1, **caractérisé en ce que** l'application massique de la masse adhésive est de 10 à 120 g/m².

7. Ruban adhésif pour emballage selon la revendication 1, **caractérisé en ce que**, pour améliorer l'ancrage de la masse, on opère un traitement de surface physique du support ou l'on traite au préalable le support par un apprêt.

8. Ruban adhésif pour emballage selon la revendication 1, **caractérisé en ce que** la dispersion de styrène - butadiène est du type d'une dispersion de styrène ― butadiène carboxylée.

9. Ruban adhésif pour emballage selon la revendication 1, **caractérisé en ce que** la fraction de résine est de l'ordre de 10 à 40% par rapport à la teneur totale en solides.

10. Utilisation d'un ruban adhésif pour emballage selon l'une quelconque des revendications 1 à 9 pour le collage à haute force d'accrochage et hautes valeurs de cohésion, en particulier sur des papiers ou cartons recyclés.
